# EUROPEAN PATENT APPLICATION

(11) **EP 4 693 667 A1**
(43) Date of publication of application: **11.02.2026**
(21) Application number: 24780587.2
(22) Date of filing: 28.03.2024
(51) Int. Cl.: H01M 50/291, H01G 11/18, H01G 11/82, H01M 10/613, H01M 10/647, H01M 10/6572, H01M 50/202, H01M 50/209

(54) **POWER STORAGE DEVICE**

(30) Priority: 28.03.2023 JP 2023052073
(71) Applicant: GS Yuasa International Ltd., Kisshoin, Minami-ku, Kyoto-shi, Kyoto 601-8520 (JP)
(72) Inventor: KAWANISHI Hironori, Kyoto-shi, Kyoto 601-8520 (JP)
(74) Representative: Grünecker Patent- und Rechtsanwälte PartG mbB
(86) International application number: PCT/JP2024/012543
(87) International publication number: WO 2024/204486

(57) **Abstract**

An energy storage apparatus includes: an energy storage device; a spacer disposed along the energy storage device; and an insulating member, the spacer includes a spacer main body portion facing the energy storage device in a first direction, the energy storage device includes a first side surface on one side in a second direction orthogonal to the first direction, the insulating member is adhered to the first side surface, and the spacer main body portion does not protrude beyond the insulating member toward one side in the second direction.

## Description

### TECHNICAL FIELD

The present invention relates to an energy storage apparatus.

### BACKGROUND ART

Patent Document 1 discloses an assembled battery configured by arranging a plurality of batteries with insulating separators sandwiched therebetween. The separator is, for example, a resin molded product manufactured by resin molding. The separator includes a cooling air passage through which cooling air passes between the battery and the separator, a holding portion that holds the battery to surround all corners of the battery, and an insulating portion that is interposed between adjacent batteries.

### PRIOR ART DOCUMENT

### PATENT DOCUMENT

Patent Document 1: JP-A-2012-199045

### SUMMARY OF THE INVENTION

### PROBLEMS TO BE SOLVED BY THE INVENTION

In the above-mentioned conventional assembled battery, the separator includes a cooling air passage between the insulating portion of the separator and the adjacent battery. This causes an increase in size of the assembled battery in the direction in which the separators and the batteries are arranged. Therefore, it is conceivable to cool the battery from a side surface of the battery that is not adjacent to the insulating portion of the separator. However, the conventional separator includes a holding portion that holds the battery to surround all corners of the battery. Therefore, it is not easy to cool the battery from that side surface.

The present invention has been made by the inventors of the present application by focusing newly on the above-mentioned problem, and an object of the present invention is to provide an energy storage apparatus capable of efficiently controlling a temperature of an energy storage device.

### MEANS FOR SOLVING THE PROBLEMS

An energy storage apparatus according to one aspect of the present invention includes: an energy storage device; a spacer disposed along the energy storage device; and an insulating member, in which the spacer includes a spacer main body portion facing the energy storage device in a first direction, the energy storage device includes a first side surface on one side in a second direction orthogonal to the first direction, the insulating member is adhered to the first side surface, and the spacer main body portion does not protrude beyond the insulating member toward one side in the second direction.

### ADVANTAGES OF THE INVENTION

According to the present invention, it is possible to provide an energy storage apparatus capable of efficiently controlling a temperature of an energy storage device.

### BRIEF DESCRIPTION OF THE DRAWINGS

Fig. 1 is a perspective view illustrating an external appearance of an energy storage apparatus according to an embodiment.
Fig. 2 is an exploded perspective view of the energy storage apparatus according to the embodiment.
Fig. 3 is a perspective view of an energy storage device according to the embodiment.
Fig. 4 is a perspective view illustrating an external appearance of an insulating member according to the embodiment.
Fig. 5 is a perspective view of a spacer according to the embodiment.
Fig. 6 is a front view of the spacer according to the embodiment.
Fig. 7 is a cross-sectional view illustrating a cross section of the spacer and the insulating member according to the embodiment.
Fig. 8A is a side view illustrating a structural relationship between a substrate and an energy storage device according to the embodiment.
Fig. 8B is a side view illustrating a state in which the substrate according to the embodiment is in the middle of being folded.
Fig. 8C is a side view illustrating a state in which the folding of the substrate according to the embodiment is completed.

### MODE FOR CARRYING OUT THE INVENTION

(1) An energy storage apparatus according to one aspect of the present invention includes: an energy storage device; a spacer disposed along the energy storage device; and an insulating member, in which the spacer includes a spacer main body portion facing the energy storage device in a first direction, the energy storage device includes a first side surface on one side in a second direction orthogonal to the first direction, the insulating member is adhered to the first side surface, and the spacer main body portion does not protrude beyond the insulating member toward one side in the second direction.
   According to the energy storage apparatus described in (1) above, the spacer main body portion does not protrude from the insulating member adhered to the first side surface of the energy storage device. Therefore, the first side surface of the energy storage device can be brought into contact with a temperature control member for controlling a temperature of the energy storage device via the insulating member. Accordingly, the temperature of the energy storage device can be controlled efficiently.
(2) In the energy storage apparatus according to (1), in a third direction orthogonal to the first direction and the second direction, a width of the insulating member may be shorter than a width of the first side surface.
   According to the energy storage apparatus described in (2) above, since the width of the insulating member in the third direction is shorter than the width of the first side surface in the third direction, protrusion of the insulating member in the third direction from the first side surface is suppressed, thereby suppressing peeling (curling up) of the insulating member from the first side surface.
(3) In the energy storage apparatus according to (1) or (2), the spacer may further include an opposing wall portion facing an end portion of the first side surface in a third direction orthogonal to the first direction and the second direction, and an end portion of the insulating member in the third direction may be located between the opposing wall portion and the first side surface.
   According to the energy storage apparatus described in (3) above, the opposing wall portion of the spacer can restrict movement of the energy storage device to one side in the second direction. Since the opposing wall portion overlaps the end portion of the insulating member in the third direction, a range of the first side surface of the energy storage device that is not covered by the insulating member is covered by the opposing wall portion, thereby more reliably insulating the energy storage device from other members.
(4) In the energy storage apparatus according to any one of (1) to (3), the first side surface may be a bottom surface of the energy storage device.
   According to the energy storage apparatus described in (4) above, since the energy storage device is disposed on the temperature control member, the weight of the energy storage device can be utilized to improve adhesion between the temperature control member and the insulating member adhered to the bottom surface of the energy storage device.
(5) In the energy storage apparatus according to any one of (1) to (4), the insulating member may include: a first insulating portion adhered to the first side surface; and a second insulating portion connected to the first insulating portion, the energy storage device may include a second side surface facing the spacer main body portion in the first direction, and the second insulating portion may be located between the spacer main body portion and the second side surface.
   According to the energy storage apparatus described in (5) above, the second insulating portion of the insulating member is disposed between the spacer and the second side surface of the energy storage device, thereby increasing a creepage distance between the first side surface and another member on the opposite side of the spacer sandwiched therebetween from the energy storage device. Accordingly, it is possible to suppress problems caused by electrical conduction between the energy storage device and other members.
(6) In the energy storage apparatus according to any one of (1) to (5), the spacer may include a protruding part protruding toward the energy storage device, and the protruding part may be in contact with the energy storage device in a protruding direction of the protruding part and may not be in contact with the insulating member in the protruding direction.
   According to the energy storage apparatus described in (6) above, the protruding part of the spacer is in contact with the energy storage device, whereby the protruding part is compressed in the protruding direction. Accordingly, it is possible to restrict movement of the energy storage device while absorbing the size tolerance of the energy storage device. Since no insulating member is sandwiched between the protruding part and the energy storage device, the size of the energy storage apparatus is unlikely to increase due to the arrangement of the insulating member.
(7) In the energy storage apparatus according to (6), the protruding part may protrude from the spacer main body portion toward the energy storage device.

According to the energy storage apparatus described in (7) above, the protruding part of the spacer can restrict movement of the energy storage device while absorbing the size tolerance of the energy storage device in the first direction in which the energy storage device and the spacer are arranged. The insulating member is not sandwiched between the protruding part and the energy storage device in the first direction. Therefore, an increase in size of the energy storage apparatus in the first direction due to the arrangement of the insulating member can be suppressed.

Hereinafter, an energy storage apparatus according to an embodiment of the present invention will be described with reference to the drawings. The embodiments described below are all comprehensive or specific examples. The numerical values, shapes, materials, components, the arrangement positions and connection modes of the components, manufacturing processes, and the order of the manufacturing processes shown in the following embodiments are merely examples and are not intended to limit the present invention. In each drawing, the dimensions and the like are not illustrated strictly. In each drawing, the same or similar components are designated by the same reference numerals.

In the following description and drawings, an arrangement direction of a pair of terminals in one energy storage device, an opposing direction of a pair of short side surfaces in one energy storage device, or an arrangement direction of a pair of side members is defined as an X-axis direction. An arrangement direction of a plurality of energy storage devices, an arrangement direction of a plurality of spacers, an arrangement direction of a pair of end members, an opposing direction of a pair of long side surfaces of one energy storage device, or a thickness direction of an energy storage device or an end member is defined as a Y-axis direction. An arrangement direction of a case main body and a lid plate, a vertical direction, or an arrangement direction of a case main body and a temperature control member in a case of an energy storage device is defined as a Z-axis direction. The X-axis direction, the Y-axis direction, and the Z-axis direction intersect with each other (in the present embodiment, the X-axis direction, the Y-axis direction, and the Z-axis direction are orthogonal to each other). Depending on the mode of use, the Z-axis direction may not be the vertical direction, but for the sake of convenience, the following description will be given assuming that the Z-axis direction is the vertical direction.

In the following description, a positive X-axis direction refers to an arrow direction of the X axis, and a negative X-axis direction refers to the direction opposite to the positive X-axis direction. When simply referring to the X-axis direction, it refers to both or either of the positive X-axis direction and the negative X-axis direction. The same applies to the Y-axis direction and the Z-axis direction. In the following, the Y-axis direction may be referred to as a first direction, the Z-axis direction may be referred to as a second direction, and the X-axis direction may be referred to as a third direction. Expressions indicating a relative direction or posture, such as parallel and orthogonal, may include cases where the direction or posture is not strictly the same. Two directions being parallel does not only mean that the two directions are completely parallel, but also means that the two directions are substantially parallel, that is, that there is a difference of about a few percent. In the following description, the expression "insulation" means "electrical insulation". The insulating material is preferably made of a material having a volume resistivity of 1 × 10¹⁰ Ωm or more.

### [1. General description of Energy Storage Apparatus]

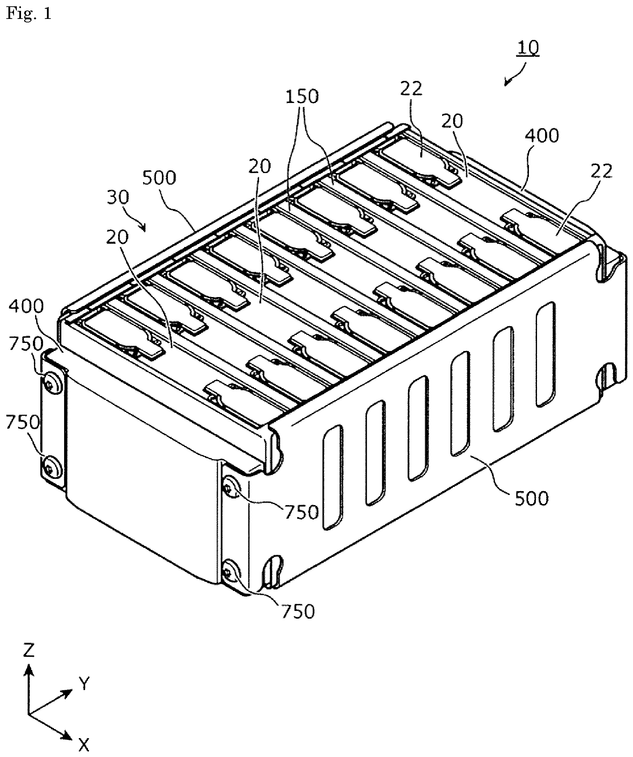

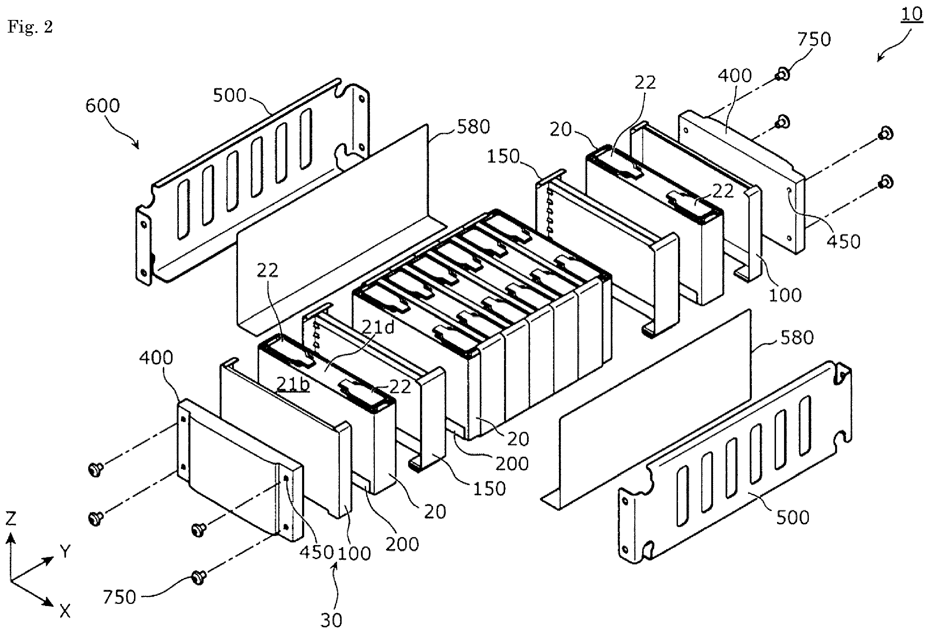

An energy storage apparatus 10 according to the present embodiment will be generally described with reference to Figs. 1 and 2. Fig. 1 is a perspective view illustrating an external appearance of the energy storage apparatus 10 according to the embodiment. Fig. 2 is an exploded perspective view of the energy storage apparatus 10 according to the embodiment.

The energy storage apparatus 10 is an apparatus that can be charged with electricity from the outside and can also discharge electricity to the outside. The energy storage apparatus 10 is a battery module (assembled battery) used for power storage or power supply purposes. The energy storage apparatus 10 is used as a battery for driving or starting the engine of a moving body such as an automobile, a motorcycle, a watercraft, a ship, a snowmobile, an agricultural machine, a construction machine, an automatic guided vehicle (AGV), or a railway vehicle for an electric railway. Examples of the above-mentioned automobiles include electric vehicles (EVs), hybrid electric vehicles (HEVs), plug-in hybrid electric vehicles (PHEVs), and fossil fuel (gasoline, diesel, liquefied natural gas, etc.) automobiles. Examples of the above-mentioned railway vehicles for an electric railway include electric trains, monorails, linear motor cars, and hybrid electric trains equipped with both a diesel engine and an electric motor. The energy storage apparatus 10 may be used as a stationary battery for home or business use.

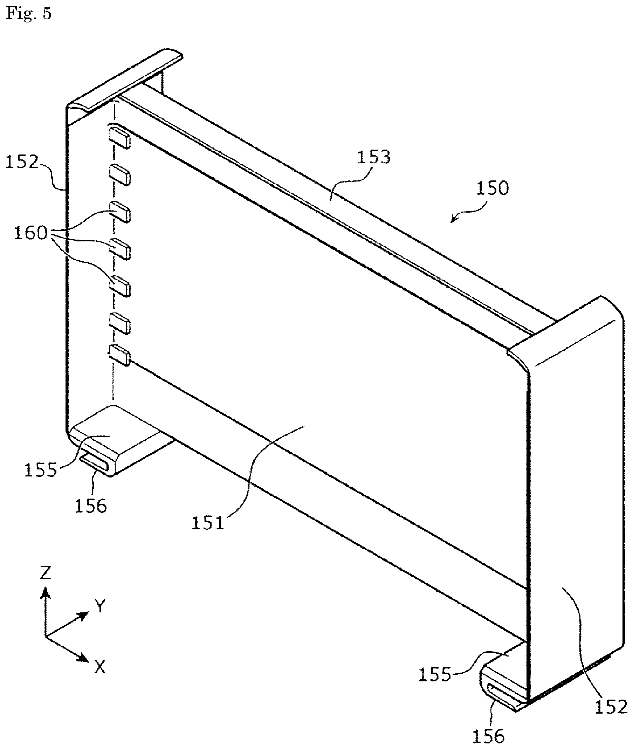

As illustrated in Figs. 1 and 2, the energy storage apparatus 10 includes an energy storage device array 30 formed by arranging a plurality of energy storage devices 20, and a restraining member 600 including a pair of end members 400 and a pair of side members 500. In the present embodiment, the energy storage device array 30 includes spacers 100 disposed at both ends in the arrangement direction of the plurality of energy storage devices 20 (in the present embodiment, the Y-axis direction), and a spacer 150 disposed between two adjacent energy storage devices 20. The opposing direction between the energy storage device 20 and a main body portion (a spacer main body portion 151, see Fig. 5 described later) of the spacer 150 adjacent to the energy storage device 20 is an example of a first direction. In the present embodiment, the first direction coincides with the arrangement direction (arrangement direction) of the plurality of energy storage devices 20 and the Y-axis direction.

The energy storage apparatus 10 includes a side sheet 580 disposed between the side member 500 and the energy storage device array 30. The energy storage apparatus 10 also includes bus bars that connect the energy storage devices 20 in series or in parallel, but illustration and description thereof are omitted. In addition to the above components, the energy storage apparatus 10 may include a bus bar frame that positions the bus bars, an outer case that accommodates the above components, external terminals that are connected to external bus bars, etc., and electrical equipment such as a circuit board, fuses, relays, and connectors that monitor or control the charging and discharging states of the energy storage devices 20.

The energy storage device 20 is a secondary battery (battery cell), and more specifically, a nonaqueous electrolyte secondary battery such as a lithium ion secondary battery. The energy storage device 20 has a flat rectangular parallelepiped shape (prismatic shape). In the present embodiment, eight energy storage devices 20 are arranged side by side in the Y-axis direction. There are no limitations on the size or shape of the energy storage device 20 or number of the energy storage devices 20 arranged, and the number of the energy storage devices 20 may be one or more. The energy storage device 20 may be a secondary battery other than a nonaqueous electrolyte secondary battery, or may be a capacitor. The energy storage device 20 may be a primary battery. The energy storage device 20 may be a battery using a solid electrolyte.

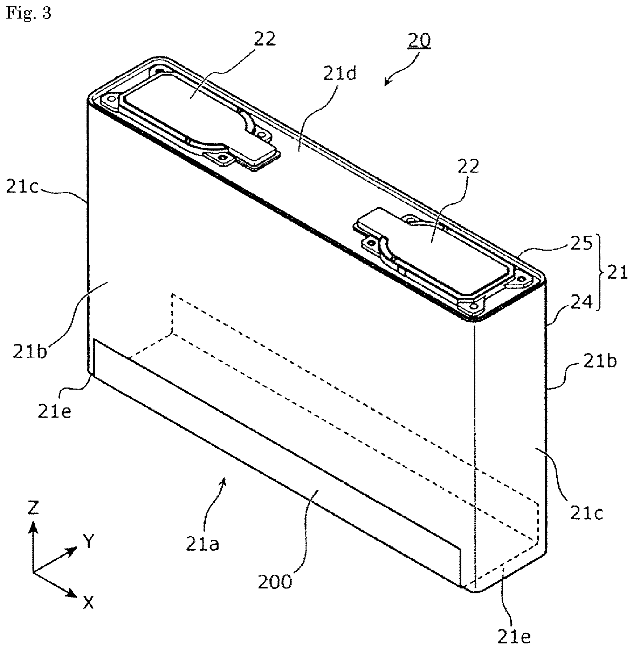

In the present embodiment, an insulating member 200 is fixed to a plurality of energy storage devices 20 by an adhesive. In the present embodiment, the insulating member 200 is a resin sheet. A temperature control member (not illustrated in Figs. 1 and 2) contacts the plurality of energy storage devices 20 via the insulating member 200, thereby preventing the temperature from becoming too high. The detailed configurations of the energy storage device 20 and the insulating member 200 according to the present embodiment will be described later with reference to Figs. 3 to 8C.

The spacers 100 and 150 are plate-like members that are disposed adjacent to the energy storage device 20 and insulate the energy storage device 20 from other members. The spacer 150 is an inter-cell spacer that is disposed between two energy storage devices 20 adjacent to each other in the Y-axis direction and insulates one of the two energy storage devices 20 from the other. The spacer 100 is an end spacer that is disposed between an end member 400 and an energy storage device 20 at an end portion of the energy storage device array 30, and insulates the energy storage device 20 from the end member 400. In the present embodiment, the spacers 100 and 150 also function as cell holders that hold the energy storage devices 20.

In the energy storage device array 30 according to the present embodiment, seven spacers 150 and a pair (two) of spacers 100 are disposed for eight energy storage devices 20. The number of spacers 100 and 150 may be changed as appropriate depending on the number of energy storage devices 20 included in the energy storage apparatus 10, etc. The spacers 100 and 150 are formed from insulating members such as polycarbonate (PC), polypropylene (PP), polyethylene (PE), polystyrene (PS), polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene perfluoroalkyl vinyl ether (PFA), polytetrafluoroethylene (PTFE), polyethersulfone (PES), polyamide (PA), ABS resin, or composite materials thereof, metals with insulating coating, or members having thermal insulation properties such as an aggregate of mica pieces.

The restraining members 600 are members that compress (restrain) the energy storage device array 30 in the arrangement direction (Y-axis direction) by means of the end members 400 and the side members 500. The end member 400 and the side member 500 are formed from metal members such as steel or stainless steel from the viewpoint of ensuring strength, but the material is not particularly limited. The end member 400 and the side member 500 may be formed from a high-strength insulating member, or may be made of a metal member that has been subjected to an insulating treatment.

The end members 400 are disposed on both sides of the energy storage device array 30 in the Y-axis direction, and are members that sandwich and hold the energy storage device array 30 from both sides in the arrangement direction (Y-axis direction). In the present embodiment, the end member 400 is a block-shaped member. A plate-like member (for example, called an "end plate") whose thickness direction is oriented in the Y-axis direction may be employed as the end member 400.

The side member 500 is a plate-like elongated member disposed on the side of the energy storage device array 30 in the X-axis direction orthogonal to the Y-axis direction, which is the arrangement direction (first direction). The side members 500 are disposed on both the positive X-axis direction and the negative X-axis direction of the energy storage device array 30. The side sheet 580 is disposed between the pair of side members 500 and the energy storage device array 30. The side members 500 are attached at both ends in the Y-axis direction to the pair of end members 400 and connect the pair of end members 400 together, thereby restraining the energy storage device array 30.

The side member 500 is connected to the end member 400 by two bolts 750 arranged in the Z-axis direction. The connection of the side member 500 to the end member 400 is not limited to fixing with the bolts 750, but may be made by welding, crimping, or the like. In the present embodiment, the side member 500 is, for example, a plate-like member called a "side plate", but the shape of the side member 500 is not particularly limited. A round or square bar-shaped member may be employed as the side member 500. The number of connection points between one side member 500 and one end member 400 does not have to be two, but may be one or three or more. One side member 500 and one end member 400 may be connected by three or more bolts 750.

The side sheets 580 are disposed on both sides of energy storage device array 30 in the X-axis direction and are plate-like elongated insulating members (insulators) extending in the Y-axis direction. The side sheet 580 insulates the plurality of energy storage devices 20 from the side member 500. The side sheet 580 may be made of any material as long as it is a member having insulating properties. For example, the side sheet 580 may be made of any insulating material that can be used for the spacers 100 and 150 and the insulating member 200.

### [2. Description of Energy Storage Device]

Fig. 3 is a perspective view of the energy storage device 20 according to the embodiment. As illustrated in Fig. 3, the energy storage device 20 includes a case 21 and a pair of terminals 22 (positive and negative electrodes). The case 21 accommodates therein an electrode assembly, a pair of current collectors (positive and negative electrodes), an electrolyte solution (nonaqueous electrolyte), and the like, but these are not illustrated in the drawing. There are no particular limitations on the type of electrolyte solution as long as it does not impair the performance of the energy storage device 20, and various types can be selected.

In addition to the above components, the energy storage device 20 may also include a spacer or the like that is disposed on the side or below the electrode assembly. The case 21 is a rectangular parallelepiped (box-shaped) case. The case 21 includes a case main body 24 and a lid plate 25 that closes the opening of the case main body 24. After the electrode assembly and the like are accommodated inside the case main body 24, the case main body 24 and the lid plate 25 are joined by welding or the like, and the inside of the case 21 is sealed. The materials for the case main body 24 and the lid plate 25 are not particularly limited, but are preferably weldable metals such as stainless steel, aluminum, an aluminum alloy, iron, and plated steel sheets.

As illustrated in Fig. 3, the case 21 includes a first side surface 21a in a negative Z-axis direction, a second side surface 21b in a positive Y-axis direction and a negative Y-axis direction, a third side surface 21c in the positive X-axis direction and the negative X-axis direction, and a fourth side surface 21d in a positive Z-axis direction. The Z-axis direction is an example of a second direction, and the negative Z-axis direction is an example of one side of the second direction. The X-axis direction is an example of a third direction.

In the present embodiment, the first side surface 21a is the bottom surface of the case 21, a portion of which is covered by the insulating member 200, and the other portion of which is exposed from the insulating member 200. The first side surface 21a includes an exposed portion 21e that is not covered by the insulating member 200. The second side surface 21b is a long side surface of the case 21, the third side surface 21c is a short side surface of the case 21, and the fourth side surface 21d is a terminal arrangement surface of the case 21. The first side surface 21a, the second side surface 21b, and the third side surface 21c are formed by the case main body 24, and the fourth side surface 21d is formed by the lid plate 25.

The bottom surface of the case 21 (energy storage device 20) can be described as the surface that faces downward when the energy storage device 20 is in use, or the surface that faces in the opposite direction (negative Z-axis direction) to the direction in which the terminal 22 of the energy storage device 20 is disposed (positive Z-axis direction). For example, in the energy storage device 20 illustrated in Fig. 3, it is assumed that the terminal 22 is disposed on one of a pair of short side surfaces (the third side surfaces 21c in the present embodiment) rather than on the fourth side surface 21d. In this case, the other of the pair of third side surfaces 21c is the bottom surface. When the case 21 of the energy storage device 20 includes the case main body 24 and the lid plate 25 (see Fig. 3), the bottom surface of the energy storage device 20 is the outer surface of the wall portion of the case main body 24 that is opposite to the lid plate 25 (the surface that comes into contact with the space or object outside the case 21).

The second side surface 21b, which is a long side surface, is disposed to face the adjacent spacer 100 or 150 in the Y-axis direction. The third side surface 21c, which is a short side surface, is adjacent to the first side surface 21a, the second side surface 21b, and the fourth side surface 21d, and has an area smaller than that of the second side surface 21b. A pair of terminals 22 is disposed on the fourth side surface 21d. A gas release valve or the like may be disposed on the fourth side surface 21d for releasing pressure when the pressure inside the case 21 increases excessively.

The terminal 22 is a terminal that is electrically connected to the electrode assembly via a current collector. The terminal 22 is formed from aluminum, an aluminum alloy, copper, a copper alloy, or the like. In the present embodiment, the terminal 22 includes a flat portion to which a conductive member such as a bus bar is welded. The terminal 22 may include a shaft portion for fixing a conductive member such as a bus bar with a nut.

The electrode assembly is an energy storage element (power generating element) formed by stacking positive and negative electrode plates and a separator. The positive electrode plate includes a current collector foil (positive electrode metal foil) and an active material layer formed on the current collector foil. The negative electrode plate includes a current collector foil (negative electrode metal foil) and an active material layer formed on the current collector foil. As the active material used in the active material layer, any known material can be used as long as it is capable of absorbing and releasing lithium ions. As the separator, a microporous resin sheet or nonwoven fabric can be used. In the present embodiment, the electrode assembly is formed by stacking plates in the Y-axis direction. The electrode assembly may be of any type, such as a wound type electrode assembly formed by winding plates, a stacking type (stack type) electrode assembly formed by stacking a plurality of flat-plate-like plates, or a bellows type electrode assembly in which plates are folded in a bellows shape.

### [3. Configuration of Insulating Member 200]

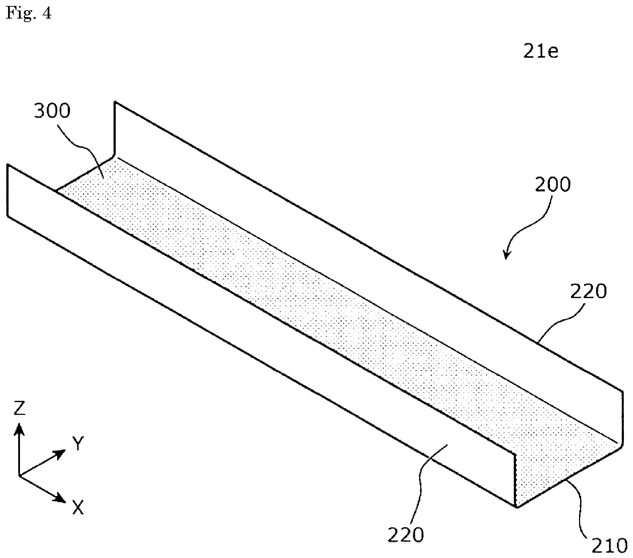

Fig. 4 is a perspective view illustrating an external appearance of the insulating member 200 according to the embodiment. In Fig. 4, an adhesive member 300 is represented by a patterned range. In the present embodiment, the insulating member 200 is a sheet-like member made of an insulating material such as resin. The insulating member 200 is also called an "insulating sheet" or an "insulating film". Examples of materials that can be used to form the insulating member 200 include insulating resins such as PC, PP, PE, PPS, PET, PBT, or ABS resin, epoxy resin, Kapton (registered trademark), Teflon (registered trademark), silicone, polyisoprene, and polyvinyl chloride. The thickness of the insulating member 200 is about 0.1 mm to 1 mm. The thermal conductivity of the insulating member is preferably 0.10 W/m ·K or more.

In the present embodiment, the insulating member 200 is adhered to the first side surface 21a of the energy storage device 20 in a state in which the insulating member 200 covers a portion of the first side surface 21a. The insulating member 200 is adhered to the first side surface 21a by the adhesive member 300 disposed on at least one of the first side surface 21a of the energy storage device 20 and the insulating member 200. The type of the adhesive member 300 is not particularly limited, and various adhesives such as resin-based adhesives and silicone-based adhesives, and various pressure-sensitive adhesives such as acrylic-based pressure-sensitive adhesives and silicone-based pressure-sensitive adhesives can be employed as the adhesive member 300. When a pressure-sensitive adhesive is employed as the adhesive member 300, the insulating member 200 may be adhered to the first side surface 21a by a pressure-sensitive adhesive layer (adhesive layer) formed on one side of the sheet-like insulating member 200.

As illustrated in Figs. 3 and 4, the insulating member 200 includes a first insulating portion 210 adhered to the first side surface 21a, and a second insulating portion 220 connected to the first insulating portion 210. As illustrated in Fig. 4, the second insulating portions 220 are connected to both ends of the first insulating portion 210 in the Y-axis direction. The two second insulating portions 220 face the second side surface 21b of the energy storage device 20 (see Fig. 3). In Fig. 4, the adhesive member 300 is disposed only on the first insulating portion 210, but the adhesive member 300 may also be disposed on the inner surfaces of the two second insulating portions 220 (the facing surfaces of the two second insulating portions 220). In other words, the second insulating portion 220 may be adhered to the second side surface 21b of the energy storage device 20.

### [4. Spacer 150 and Its Surroundings]

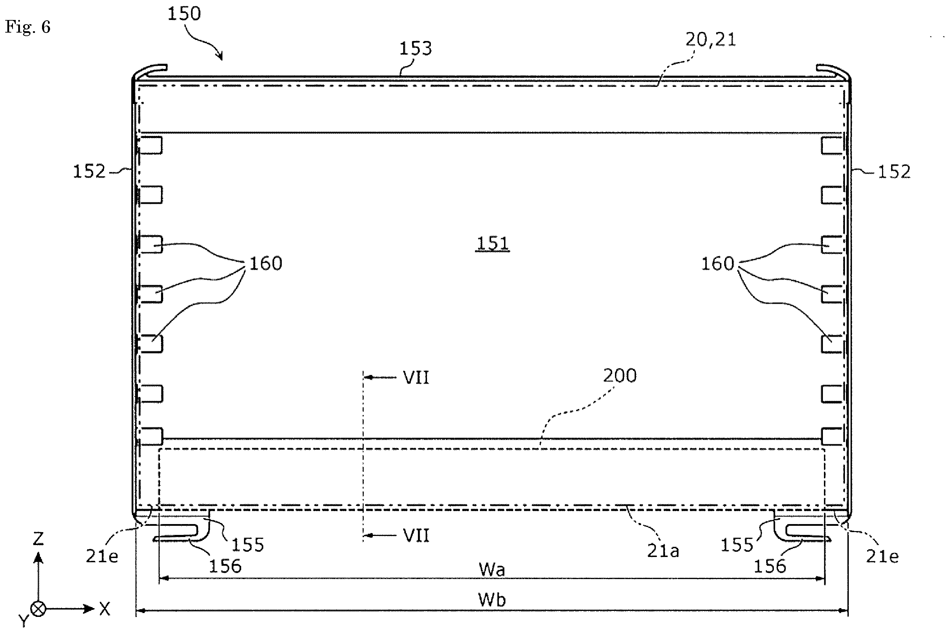

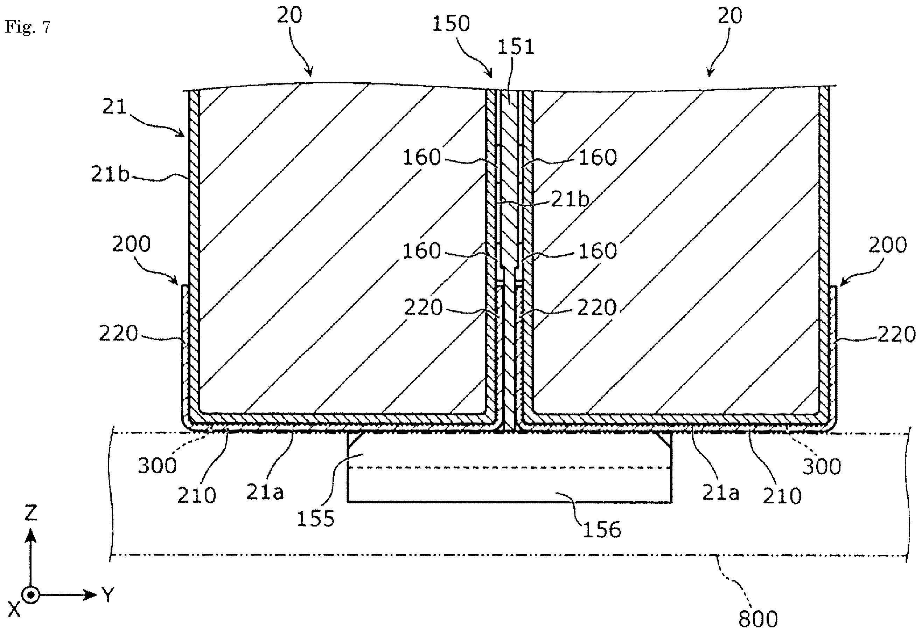

Fig. 5 is a perspective view of the spacer 150 according to the embodiment. Fig. 6 is a view (front view) of the spacer 150 according to the embodiment as viewed from the negative Y-axis direction. In Fig. 6, the outer shape of the case 21 of the energy storage device 20 is indicated by a two-dot chain line, and the outer shape of the insulating member 200 is indicated by a thick dashed line. Fig. 7 is a cross-sectional view illustrating a cross section of the spacer 150 and the insulating member 200 according to the embodiment. Fig. 7 illustrates a portion of a cross section taken along line VII-VII in Fig. 6, and elements such as an electrode assembly accommodated inside the energy storage device 20 are omitted. In Fig. 7, an approximate range of a temperature control member 800 disposed along the energy storage device array 30 is indicated by a two-dot chain line. In Fig. 7, the adhesive member 300 is indicated by a dotted line between the energy storage device 20 and the insulating member 200. In Fig. 7, the first insulating portion 210 and the first side surface 21a are adhered with the adhesive member 300, and the second insulating portion 220 and the second side surface 21b are adhered with the adhesive member 300.

As illustrated in Figs. 5 to 7, the spacer 150 according to the present embodiment includes a spacer main body portion 151 disposed along the second side surface 21b of the energy storage device 20. In other words, the spacer main body portion 151 faces the energy storage device 20 in the Y-axis direction. In the present embodiment, the spacer main body portion 151 is located between two energy storage devices 20 arranged in the Y-axis direction, thereby suppressing contact between the second side surface 21b located in the positive Y-axis direction of the spacer main body portion 151 and the second side surface 21b located in the negative Y-axis direction of the spacer main body portion 151.

The spacer 150 includes opposing wall portions 155, a side wall portion 152, and an upper wall portion 153. As illustrated in Figs. 6 and 7, the opposing wall portion 155 faces the first side surface 21a of the energy storage device 20. The opposing wall portion 155 faces an end portion in the X-axis direction of the first side surface 21a. In the present embodiment, the opposing wall portion 155 faces an end portion in the positive X-axis direction of the first side surface 21a and an end portion in the negative X-axis direction of the first side surface 21a. The opposing wall portions 155 are connected to the edge in the negative Z-axis direction of the spacer main body portion 151, and to both end portions in the X-axis direction. Between the pair of opposing wall portions 155, the edge in the negative Z-axis direction of the spacer main body portion 151 is exposed. Each of the pair of opposing wall portions 155 supports the energy storage device 20 from the negative Z-axis direction. The movement of the energy storage device 20 in the negative Z-axis direction is restricted by the pair of opposing wall portions 155.

The pair of opposing wall portions 155 includes support portions 156 that protrude in the negative Z-axis direction. The spacer 150 includes a pair of support portions 156 disposed spaced apart from each other in the X-axis direction. In the energy storage device array 30 including a plurality of spacers 150, a pair of support portions 156 is arranged in the Y-axis direction to form two arrays of support portions 156. The energy storage device array 30 is supported by the two arrays of support portions 156.

The side wall portions 152 are disposed on both sides of the spacer main body portion 151 in the positive X-axis direction and the negative X-axis direction, and face the third side surface 21c of the energy storage device 20 (see Fig. 3). In other words, the movement of the energy storage device 20 in the X-axis direction is restricted by the pair of side wall portions 152. The upper wall portion 153 is disposed in the positive Z-axis direction of the spacer main body portion 151, and faces the fourth side surface 21d of the energy storage device 20 (see Fig. 3). In other words, the movement of the energy storage device 20 in the positive Z-axis direction is restricted by the upper wall portion 153.

In the present embodiment, the energy storage device 20 is surrounded by the spacers 150 disposed along the energy storage device 20 in the X-axis direction, the Y-axis direction, and the Z-axis direction. The spacer 150 according to the present embodiment includes a structure for holding the energy storage device 20. The pair of opposing wall portions 155 of the spacer 150 is disposed spaced apart from each other in the X-axis direction. In the present embodiment, the temperature control member 800 is disposed between the pair of opposing wall portions 155. In the present embodiment, the temperature control member 800 is a member or a device that removes heat from (that is, cools) the plurality of energy storage devices 20 by exchanging heat with the plurality of energy storage devices 20 using a liquid or gas flowing inside. The cooling method in the temperature control member 800 is not particularly limited. The temperature control member 800 may be a heat sink that dissipates (radiates) heat absorbed from the energy storage devices 20 to the outside. The temperature control member 800 may be a device that electrically cools the energy storage device 20 using a Peltier element or the like. The temperature control member 800 may be a member that applies heat (warms) to the plurality of energy storage devices 200. The temperature control member 800 may be a member that heats the plurality of energy storage devices 20 using a liquid or gas flowing inside. The temperature control member 800 may be a device that heats the plurality of energy storage devices 20 by electrical means.

In the present embodiment, in the plurality of spacers 150, the spaces between a pair of opposing wall portions 155 spaced apart in the X-axis direction are arranged continuously in the Y-axis direction. As illustrated in Figs. 6 and 7, the edge of the spacer main body portion 151 in the negative Z-axis direction that is exposed between the pair of opposing wall portions 155 does not protrude from the insulating member 200 adhered to the energy storage device 20. Therefore, it is easy to bring the temperature control member 800 into contact with the insulating member 200 adhered to the plurality of energy storage devices 20 all at once. That is, the plurality of energy storage devices 20 can efficiently exchange heat with the temperature control member 800 via the insulating member 200 adhered to the first side surface 21a.

Thus, the energy storage apparatus 10 according to the present embodiment includes the energy storage devices 20, the spacers 150 disposed along the energy storage devices 20, and the insulating members 200. The spacer 150 includes the spacer main body portion 151 that faces the energy storage device 20 in the Y-axis direction. The energy storage device 20 includes the first side surface 21a on one side in the Z-axis direction (the negative Z-axis direction in the present embodiment). The insulating member 200 is adhered to the first side surface 21a. The spacer main body portion 151 does not protrude beyond the insulating member 200 in the negative Z-axis direction.

According to this configuration, the spacer main body portion 151 does not protrude from the insulating member 200 adhered to the first side surface 21a of the energy storage device 20. Therefore, as illustrated in Fig. 7, the first side surface 21a of the energy storage device 20 can be brought into contact with the temperature control member 800 via the insulating member 200. Since the insulating member 200 is adhered to the first side surface 21a, the insulating member 200 and the first side surface 21a are well thermally connected to each other. Therefore, the temperature of the energy storage devices 20 can be efficiently controlled via the insulating member 200. Since the insulating member 200 is interposed between the temperature control member 800 and the energy storage device 20, the portion of the temperature control member 800 facing the energy storage device 20 can be made of metal. The insulating member 200 suppresses electrical conduction between the energy storage devices 20 and the temperature control member 800, and allows heat exchange between the energy storage devices 20 and the temperature control member 800 to be carried out more efficiently.

In the present embodiment, a structure is employed in which the temperature of the energy storage devices 20 is controlled not in the arrangement direction (Y-axis direction) of the energy storage devices 20 and the spacers 150, but in a direction orthogonal to the arrangement direction. Therefore, unlike the case where a gas or liquid flow path for controlling the temperature of the energy storage devices 20 is provided in the spacer main body portion 151, an increase in the length of the energy storage device array 30 in the Y-axis direction can be suppressed.

In the present embodiment, since the adhesive member 300 is disposed between the first side surface 21a and the insulating member 200, it is preferable that the adhesive or pressure-sensitive adhesive employed as the adhesive member 300 has high thermal conductivity. The adhesive or pressure-sensitive adhesive employed as the adhesive member 300 preferably has a thermal conductivity of 0.10 W/m ·K or more.

In the present embodiment, as illustrated in Fig. 7, in the Z-axis direction, the position of the edge of the spacer main body portion 151 in the negative Z-axis direction is substantially the same as the position of the surface of the insulating member 200 in the negative Z-axis direction. The edge of the spacer main body portion 151 may be located further in the positive Z-axis direction than the surface of the insulating member 200.

In the present embodiment, as illustrated in Fig. 6, a width Wa of the insulating member 200 in the X-axis direction is shorter than a width Wb of the first side surface 21a.

According to this configuration, the protrusion of the insulating member 200 from the first side surface 21a in the X-axis direction is suppressed, and thus peeling (curling up) of the insulating member 200 from the first side surface 21a is suppressed. The first side surface 21a includes exposed portions 21e that are not covered by the insulating member 200 (see Figs. 3 and 6). The exposed portions 21e are disposed on both ends of the first side surface 21a in the X-axis direction. In this way, the insulating member 200 is formed to a size that does not cover at least a portion of the first side surface 21a, so that the amount of insulating material such as resin required to form the insulating member 200 can be suppressed.

In the present embodiment, the spacer 150 includes an opposing wall portion 155 that faces the end portion in the X-axis direction of the first side surface 21a. An end portion of the insulating member 200 in the X-axis direction is located between the opposing wall portion 155 and the first side surface 21a.

According to this configuration, the opposing wall portion 155 can restrict the movement of the energy storage device 20 in the negative Z-axis direction. The opposing wall portion 155 overlaps the end portion of the insulating member 200 in the X-axis direction. Therefore, the range of the first side surface 21a that is not covered by the insulating member 200 (the exposed portions 21e in Figs. 3 and 6) is covered by the opposing wall portion 155, so that insulation from other members is more reliably achieved.

In the present embodiment, the first side surface 21a is the bottom surface of the energy storage device 20. Therefore, as illustrated in Fig. 7, the energy storage device 20 is disposed on the temperature control member 800. Therefore, the weight of the energy storage device 20 can be utilized to improve the adhesion between the temperature control member 800 and the insulating member 200 adhered to the bottom surface of the energy storage device 20. This is advantageous from the viewpoint of efficiently controlling the temperature of the energy storage device 20.

The insulating member 200 according to the present embodiment includes a first insulating portion 210 adhered to the first side surface 21a and a second insulating portion 220 connected to the first insulating portion 210. The energy storage device 20 includes a second side surface 21b facing the spacer main body portion 151 in the Y-axis direction. As illustrated in Fig. 7, the second insulating portion 220 is located between the spacer main body portion 151 and the second side surface 21b.

In this manner, the second insulating portion 220 of the insulating member 200 is disposed between the spacer main body portion 151 and the second side surface 21b of the energy storage device 20. Therefore, the creepage distance between the first side surface 21a of the energy storage device 20 and other members (such as other energy storage devices 20) on the opposite side of the energy storage device 20 with the spacer 150 sandwiched therebetween increases. Accordingly, it is possible to suppress electrical conduction between the energy storage device 20 and the other members.

In the energy storage apparatus 10 according to the present embodiment, the edge of the spacer main body portion 151 in the negative Z-axis direction may be located further in the positive Z-axis direction than the insulating member 200, as described above. Even in this case, the second insulating portion 220 of the insulating member 200 is disposed between the spacer main body portion 151 and the second side surface 21b. Therefore, one lower end portion of two adjacent energy storage devices 20 (see Fig. 7) sandwiching the spacer main body portion 151 therebetween is insulated from the other lower end portion by at least second insulating portion 220.

In the present embodiment, the length of the second insulating portion 220 in the Z-axis direction is equal to or less than half the length of the second side surface 21b in the Z-axis direction. In other words, the insulating member 200 only needs to be sized to cover at least a portion of the first side surface 21a of the energy storage device and half or less of the second side surface 21b in the Z-axis direction. Therefore, the insulating member 200 can be formed using a relatively small amount of material.

The insulating member 200 according to the present embodiment does not include a portion facing the third side surface 21c of the energy storage device 20 in the X-axis direction. Therefore, an increase in the size of the energy storage apparatus 10 in the X-axis direction caused by the arrangement of the insulating member 200 is suppressed. The third side surface 21c of the energy storage device 20 is covered with a side wall portion 152 of the spacer 150 (see Fig. 5). Therefore, electrical conduction between the third side surface 21c and other members is suppressed.

In the present embodiment, the energy storage device array 30 is restrained in the Y-axis direction by the restraining members 600 (see Fig. 2) as described above. In the energy storage apparatus 10 according to the present embodiment, a configuration is employed that more stably maintains the positions of the plurality of energy storage devices 20 in the energy storage device array 30 restrained in this manner, and also suppresses an increase in the size of the energy storage apparatus 10.

As illustrated in Figs. 5 and 6, the spacer 150 includes a protruding part 160 that protrudes toward the energy storage device 20. The protruding part 160 may be in contact with the energy storage device 20 in the protruding direction of the protruding part 160, but may not be in contact with the insulating member 200 in that protruding direction.

According to this configuration, the protruding part 160 of the spacer 150 is in contact with the energy storage device 20, whereby the protruding part 160 is compressed in the protruding direction. Accordingly, it is possible to restrict movement of the energy storage device 20 while absorbing the size tolerance of the energy storage device 20. Furthermore, the insulating member 200 is not sandwiched between the protruding part 160 and the energy storage device 20. Therefore, efficient temperature control via the insulating member 200 is possible, while an increase in size of the energy storage apparatus 10 due to the arrangement of the insulating member 200 is suppressed.

In the present embodiment, the protruding part 160 protrudes from the spacer main body portion 151 toward the energy storage device 20. Therefore, the protruding part 160 of the spacer 150 can restrict movement of the energy storage device 20 while absorbing the size tolerance of the energy storage device 20 in the arrangement direction (Y-axis direction) the energy storage device 20 and the spacer 150. Furthermore, the insulating member 200 is not sandwiched between the protruding part 160 and the energy storage device 20 in the Y-axis direction. Therefore, an increase in size of the energy storage apparatus 10 in the Y-axis direction due to the arrangement of the insulating member 200 can be suppressed.

The protruding part 160 is disposed at an end portion of the spacer main body portion 151 in a direction orthogonal to the Y-axis direction (the X-axis direction in the present embodiment). Therefore, the protruding part 160 is in contact with the rigid portion of the case 21 of the energy storage device 20 and is compressed by the portion. Therefore, the protruding part 160 can efficiently absorb the tolerance of the energy storage device 20.

### [5. Example of Method for Forming Insulating Member 200]

In the energy storage apparatus 10 configured as described above, the insulating member 200 includes a first insulating portion 210 and a second insulating portion 220, one of the first insulating portion 210 and the second insulating portion 220 being inclined at approximately 90° with respect to the other. An example of a method for forming the insulating member 200 having such a shape is folding a sheet-like substrate. Hereinafter, an example of a method for forming the insulating member 200 will be described, with the insulating member 200 before being formed into the shape illustrated in Figs. 4 and 7 being referred to as a "substrate 200a".

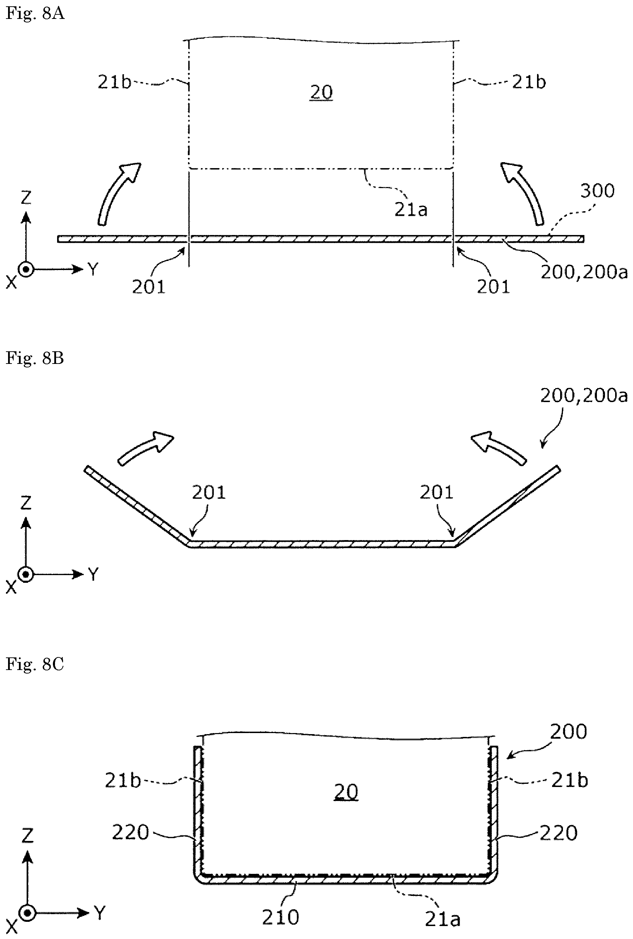

Fig. 8A is a side view (viewed from the positive X-axis direction) illustrating the structural relationship between the substrate 200a and the energy storage device 20 according to the embodiment. Fig. 8B is a side view illustrating a state in which the substrate 200a according to the embodiment is in the middle of being folded. Fig. 8C is a side view illustrating a state in which the folding of the substrate 200a according to the embodiment is completed. In Figs. 8A and 8C, the outer shape of the energy storage device 20 is indicated by a two-dot chain line.

As illustrated in Fig. 8A, the substrate 200a before being folded is a member having a substantially flat shape. In order to form the substrate 200a into the shape illustrated in Figs. 4 and 7, the substrate 200a is folded at two folding portions 201 as illustrated in Fig. 8B. The substrate 200a may be folded using a machine or manually. As illustrated in Fig. 8A, the two folding portions 201 of the substrate 200a coincide with two corners that are connection portions between the first side surface 21a and the two second side surfaces 21b of the energy storage device 20, respectively.

When folding the substrate 200a as illustrated in Fig. 8B, the substrate 200a may be folded while in contact with the end portion of the energy storage device 20 in the negative Z-axis direction, or may be folded while in contact with a mold having the same shape as that end portion of the energy storage device 20. The substrate 200a may be folded in a state in which the folding portion 201 is supported by a jig, without using the energy storage device 20 or a mold. By undergoing such a folding process, the substrate 200a is formed into a shape that conforms to the first side surface 21a and the two second side surfaces 21b of the energy storage device 20, as illustrated in Fig. 8C. That is, the insulating member 200 having the shape illustrated in Figs. 4 and 7 and including the first insulating portion 210 and the second insulating portion 220 is formed. When folding the substrate 200a using the energy storage device 20, the substrate 200a may be folded with the adhesive member 300 disposed between the substrate 200a and the energy storage device 20.

Even when the insulating member 200 formed in the shape illustrated in Fig. 8C is disposed on the energy storage device 20 without being adhered to the energy storage device 20, the insulating member 200 is sandwiched between the energy storage device 20 and the spacer 150 (see Fig. 5). Therefore, the insulating member 200 is unlikely to fall off the energy storage device 20.

A method for manufacturing the energy storage apparatus 10 including the insulating member 200 formed by folding the substrate 200a as described above will be described as follows.

The method for manufacturing the energy storage apparatus 10 includes disposing the substrate 200a of the insulating member 200 such that a portion of the substrate 200a is aligned along one of the first side surface 21a and the second side surface 21b of the energy storage device 20, and folding the substrate 200a such that another portion of the substrate 200a is aligned along the other of the first side surface 21a and the second side surface 21b.

The method for manufacturing the energy storage apparatus 10 will also be described as follows.

The method for manufacturing the energy storage apparatus 10 includes folding the substrate 200a of the insulating member 200 to form the insulating member 200 including the first insulating portion 210 and the second insulating portion 220 inclined with respect to the first insulating portion 210, and aligning the first insulating portion 210 with the first side surface 21a of the energy storage device 20 and aligning the second insulating portion 220 with the second side surface 21b of the energy storage device 20.

### [6. Description of Modification Examples]

Although the energy storage apparatus 10 according to the present embodiment has been described above, the present invention is not limited to the above embodiment. The embodiments disclosed herein are illustrative and not restrictive in all respects, and the scope of the present invention includes all modifications within the meaning and scope equivalent to scope of the claims.

The spacer 150 may not include at least one of the opposing wall portion 155, the side wall portion 152, the upper wall portion 153, and the support portion 156. In other words, the spacer 150 only needs to include at least the spacer main body portion 151. Even when the spacer 150 includes only the spacer main body portion 151, the spacer main body portion 151 can insulate one case 21 and the other case 21 of two adjacent energy storage devices 20 sandwiching the spacer main body portion 151 therebetween.

The insulating member 200 may not include the second insulating portion 220. In other words, the insulating member 200 only needs to include at least the first insulating portion 210. Even when the insulating member 200 includes only the first insulating portion 210, the first insulating portion 210 can be adhered to the first side surface 21a of the energy storage device 20 to insulate the first side surface 21a from other members such as the temperature control member 800. The second side surface 21b of the energy storage device 20 can be insulated by the spacer main body portion 151 from other members such as other energy storage devices 20.

The first side surface 21a to which the insulating member 200 is adhered does not have to be the bottom surface of the energy storage device 20. The first side surface 21a to which the insulating member 200 is adhered is a side surface in a direction (second direction) orthogonal to the arrangement direction (first direction) of the energy storage devices 20 and the spacer main body portion 151. Therefore, the first side surface 21a may be a short side surface of the energy storage device 20 (third side surface 21c in the present embodiment) or a terminal arrangement surface (fourth side surface 21d in the present embodiment). When the first side surface 21a is a short side surface of the energy storage device 20, the second direction is the X-axis direction, and the third direction is the Z-axis direction. In this case, the insulating member 200 is adhered to the short side surface of the energy storage device 20, and the spacer main body portion 151 is disposed so as not to protrude beyond the insulating member 200 in the X-axis direction. Accordingly, the first side surface 21a (short side surface) of the energy storage device 20 can be brought into contact with the temperature control member 800 via the insulating member 200. In this case, since the side wall portion 152 is treated as the "opposing wall portion", the side wall portion 152 which is the "opposing wall portion" is not provided on the spacer 150, or is disposed spaced apart in the Z-axis direction. Therefore, the temperature control member 800 can be disposed in a space where the side wall portion 152 does not exist. The temperature of the energy storage device 20 is efficiently controlled by the temperature control member 800 disposed at a position opposite to the short side surface.

Any combination of the components included in the above-described embodiment and its modification examples is also included within the scope of the present invention.

### INDUSTRIAL APPLICABILITY

The present invention can be applied to an energy storage apparatus or the like including an energy storage device such as a lithium ion secondary battery.

### DESCRIPTION OF REFERENCE SIGNS

10: Energy storage apparatus
20: Energy storage device
21: Case
21a: First side surface
21b: Second side surface
21c: Third side surface
21e: Exposed portion
100, 150: Spacer
151: Spacer main body portion
155: Opposing wall portion
160: Protruding part
200: Insulating member
200a: Substrate
201: Folding portion
210: First insulating portion
220: Second insulating portion
300: Adhesive member

## Claims

1. An energy storage apparatus comprising:
an energy storage device;
a spacer disposed along the energy storage device; and
an insulating member, wherein
the spacer includes a spacer main body portion facing the energy storage device in a first direction,
the energy storage device includes a first side surface on one side in a second direction orthogonal to the first direction,
the insulating member is adhered to the first side surface, and
the spacer main body portion does not protrude beyond the insulating member toward one side in the second direction.

2. The energy storage apparatus according to claim 1, wherein in a third direction orthogonal to the first direction and the second direction, a width of the insulating member is shorter than a width of the first side surface.

3. The energy storage apparatus according to claim 1 or 2, wherein
the spacer further includes an opposing wall portion facing an end portion of the first side surface in a third direction orthogonal to the first direction and the second direction, and
an end portion of the insulating member in the third direction is located between the opposing wall portion and the first side surface.

4. The energy storage apparatus according to claim 1 or 2, wherein the first side surface is a bottom surface of the energy storage device.

5. The energy storage apparatus according to claim 1 or 2, wherein
the insulating member includes:
a first insulating portion adhered to the first side surface; and
a second insulating portion connected to the first insulating portion,
the energy storage device includes a second side surface facing the spacer main body portion in the first direction, and
the second insulating portion is located between the spacer main body portion and the second side surface.

6. The energy storage apparatus according to claim 1 or 2, wherein
the spacer includes a protruding part protruding toward the energy storage device, and
the protruding part is in contact with the energy storage device in a protruding direction of the protruding part and is not in contact with the insulating member in the protruding direction.

7. The energy storage apparatus according to claim 6, wherein the protruding part protrudes from the spacer main body portion toward the energy storage device.
